# EUROPÄISCHE PATENTANMELDUNG

(11) **EP 3 321 689 A1**
(43) Veröffentlichungstag der Anmeldung: **16.05.2018**
(21) Anmeldenummer: 16198006.5
(22) Anmeldetag: 09.11.2016
(51) Int. Cl.: G01N 35/10, B01L 3/02

(54) **PIPETTIERSYSTEM ZUM PIPETTIEREN VON FLÜSSIGKEITEN IN EINEM AUTOMATISCHEN ANALYSEGERÄT**

(71) Anmelder: Siemens Healthcare Diagnostics Products GmbH, 35041 Marburg (DE)
(72) Erfinder: Kalbfell, Heiko, 65232 Taunusstein (DE); Bernhard, Joachim, 61184 Karben (DE)

(57) **Zusammenfassung**

Die Erfindung betrifft ein Pipettiersystem (1, 19) für ein automatisches Analysegerät (2), das Pipettiersystem (1) umfassend eine Pipettiervorrichtung (3) mit einer Pipettiernadel (4) mit einer Pipettiernadelspitze (8), einem Gasführungssystem (5) zum Führen eines Gasstroms, das Gasführungssystem (5) umfassend eine Düse (6) mit einer Öffnung (7) für den Gasstrom, wobei der durch die Öffnung (7) der Düse (6) hindurchtretende Gasstrom sich entlang der Pipettiernadel (4) in Richtung der Pipettiernadelspitze (8) ausbreiten und einen an der Pipettiernadel (4) anhaftenden Flüssigkeitstropfen (9) durch einen Druckstoß ablösen kann und wobei das Pipettiersystem (1) und das Gasführungssystem (5) miteinander verbunden sind.

## Beschreibung

Die Erfindung liegt auf dem Gebiet der automatischen in vitro-Diagnostiksysteme. Gegenstand der Erfindung ist ein Pipettiersystem zum pipettieren von Flüssigkeiten in einem automatischen Analysegerät sowie ein Verfahren zum pipettieren.

Zahlreiche Nachweis- und Analyseverfahren zur Bestimmung physiologischer Parameter in Körperflüssigkeitsproben oder anderen biologischen Proben werden heute automatisiert in großer Anzahl in automatischen Analysegeräten, auch so genannten in vitro-Diagnostiksystemen, durchgeführt.

Heutige Analysegeräte sind in der Lage, eine Vielzahl von Nachweisreaktionen und Analysen mit einer Probe durchzuführen. Um eine Vielzahl von Untersuchungen automatisiert durchführen zu können, sind diverse Vorrichtungen zum räumlichen Transfer von Messzellen, Reaktionsbehältern und Reagenzbehältern erforderlich, wie z.B. Transferarme mit Greiffunktion, Transportbänder oder drehbare Transporträder, sowie Vorrichtungen zum Transfer von Flüssigkeiten, wie z.B. Pipettiervorrichtungen. Die Geräte umfassen eine Steuereinheit, die mittels entsprechender Software dazu in der Lage ist, die Arbeitsschritte für die gewünschten Analysen weitgehend selbstständig zu planen und abzuarbeiten.

Viele der in derartigen automatisiert arbeitenden Analysegeräten verwendeten Analyseverfahren beruhen auf optischen Methoden. Diese Verfahren ermöglichen den qualitativen und quantitativen Nachweis von Analyten, d.h. der nachzuweisenden oder zu bestimmenden Substanzen in Proben. Die Bestimmung klinisch relevanter Parameter, wie zum Beispiel der Konzentration oder Aktivität eines Analyten, erfolgt vielfach, indem ein Teil einer Probe mit einem oder mehreren Testreagenzien in einem Reaktionsgefäß, welches auch die Messzelle sein kann, vermischt wird, wodurch z.B. eine biochemische Reaktion oder eine spezifische Bindungsreaktion in Gang gesetzt wird, die eine messbare Veränderung einer optischen oder anderen physikalischen Eigenschaft des Testansatzes bewirkt.

Automatisch arbeitende Analysatoren, die zur Untersuchung von biologischen Körperflüssigkeiten eingesetzt werden, umfassen verschiedene Gerätebaugruppen zum Prozessieren der Probe. Beispielsweise werden die benötigten Reagenzien mittels einer Pipettiervorrichtung mit einer Pipettiernadel in eine Messküvette eingefüllt. Die Messküvette wird dabei mit einem Küvettengreifer innerhalb des automatischen Analysegerätes zu verschiedenen Positionen mittels eines Robotorarms automatisch verfahren, der Teil einer Robotorstation ist. Nach der Messung wird die benutzte Messküvette z.B. zur Entsorgung durch einen Abfallschacht in einen Abfallbehälter verbracht.

Bekannte automatische Analysegeräte umfassen ein Gasführungssystem zum Führen eines Gasstroms, das Gasführungssystem umfassend eine Düse mit einer Öffnung für den Gasstrom, wobei der durch die Öffnung der Düse hindurchtretende Gasstrom einen an der Pipettiernadel anhaftenden Flüssigkeitstropfen durch einen Druckstoß ablösen kann. Solche Gasführungssysteme werden auch als "Air-Knife" bezeichnet und können stationär in einem automatischen Analysegerät an einer bestimmten Position im Gerät, z.B. im Bereich einer Waschstation, angebracht sein.

Häufig werden an verschiedenen Positionen in einem automatischen Analysegerät Pipettiervorgänge durchgeführt. Damit ergab sich in der Vergangenheit die Situation, dass an der Pipettiernadel anhaftenden Flüssigkeitstropfen nur an solchen, speziellen Positionen abgelöst werden konnten, an denen ein entsprechendes Gasführungssystem vorgesehen war. An anderen Positionen konnten an der Pipettiernadel anhaftenden Flüssigkeitstropfen nicht gezielt abgelöst werden was zu Kontamination des Geräts, zur Verunreinigung von Proben und zu Verlust von Probenvolumen führen kann. Insbesondere Verlust von Probenvolumen kann z.B. bei pädiatrischen Proben dazu führen, dass eine entsprechende Analyse des verbleibenden Probenvolumens nur noch eingeschränkt oder nicht möglich ist. Dies kann auch für Patienten erhebliche Nachteile bedeuten, falls sich dadurch Analyseergebnisse verzögern oder erneut Probenmaterial dem Patienten entnommen werden muss.

Es ist daher Aufgabe der Erfindung ein Pipettiersystem für ein automatisches Analysegerät zur Verfügung zu stellen, das es ermöglicht, an der Pipettiernadel anhaftende Flüssigkeitstropfen unabhängig von speziellen Positionen im Gerät gezielt ablösen zu können und so ein verlässlicheres Pipettieren von Probenvolumina zu ermöglichen.

### Diese Aufgabe wird erfindungsgemäß durch die im Folgenden beschriebenen Gegenstände und Verfahren gelöst.

Die Erfindung geht dabei von der Überlegung aus, dass ein an der Pipettiernadel anhaftender Flüssigkeitstropfen unabhängig von speziellen Positionen im Gerät gezielt abgelöst werden kann, wenn das Pipettiersystem und das Gasführungssystem miteinander verbunden sind.

Ein weiterer Gedanke der Erfindung ist, dass sich der Gasstrom, mittels dem der Flüssigkeitstropfen von der Pipettiernadel abgelöst werden kann, entlang der Pipettiernadel in Richtung der Pipettiernadelspitze ausbreitet.

Gegenstand der vorliegenden Erfindung ist ein Pipettiersystem für ein automatisches Analysegerät, das Pipettiersystem umfassend eine Pipettiervorrichtung mit einer Pipettiernadel mit einer Pipettiernadelspitze, einem Gasführungssystem zum Führen eines Gasstroms, das Gasführungssystem umfassend eine Düse mit einer Öffnung für den Gasstrom, wobei der durch die Öffnung der Düse hindurchtretende Gasstrom einen an der Pipettiernadel anhaftenden Flüssigkeitstropfen durch einen Druckstoß ablösen kann und wobei das Pipettiersystem und das Gasführungssystem miteinander verbunden sind und
wobei sich der durch die Öffnung der Düse hindurchtretende Gasstrom entlang der Pipettiernadel in Richtung der Pipettiernadelspitze ausbreitet.

Dies hat den Vorteil, dass die Entfernung von Flüssigkeitstropfen unabhängig von der Position der Pipettiernadel an verschiedenen Positionen im Analyzer möglich ist, z.B. über Probenröhrchen, an Waschstationen und/oder über Reagenzbehältern, da sich das "Air-Knife" direkt an der Pipettiernadel befindet. Ein weiterer Vorteil ist, dass durch den parallel zur Nadelachse verlaufenden Luftstrom auf ein Absaugen der abgelösten Flüssigkeitstropfen verzichtet werden kann. Dies führt insbesondere auch zu einem verminderten Platzbedarf und ermöglicht eine weniger komplexe Konstruktion des Analyzers.

Vorteilhafterweise sind das Pipettiersystem und das Gasführungssystem mittels mindestens einer Klebe- und/oder Schweißverbindung miteinander verbunden. Alternativ kann eine Verbindung auch z.B. Schrauben, Nägel oder Nieten umfassen oder das Gasführungssystem umschließt das Pipettiersystem wenigstens weilweise formschlüssig, so dass die beiden Systeme miteinander verbunden sind.

In vorteilhafter Ausgestaltung ist die Nadelachse gerade. In weiteren vorteilhafter Ausgestaltung ist die Nadelachse wenigstens in Abschnitten gebogen. Auch bei gebogener Nadelachse kann der Gasstrom vorteilhafterweise entsprechend der Nadelgeometrie folgen und sich entlang der Nadelachse in Richtung der Pipettiernadelspitze ausbreiten.

In weiterer vorteilhafter Ausgestaltung sind das Pipettiersystem und das Gasführungssystem wenigstens in einer Raumrichtung zusammen automatisch verfahrbar. Dies hat den Vorteil, dass an verschiedenen Positionen innerhalb des Analysegeräts Pipettiervorgänge durchgeführt werden können und an der Pipettiernadel anhaftende Flüssigkeitstropfen durch einen Druckstoß an unterschiedlichen Positionen entfernt werden kann.

In weiterer vorteilhafter Ausgestaltung des Pipettiersystems kann der durch die Öffnung hindurchtretende Gasstrom einen im Bereich der Pipettiernadelspitze an der Pipettiernadel anhaftenden Flüssigkeitstropfen ablösen.

In weiterer vorteilhafter Ausgestaltung des Pipettiersystems ist der Gasstrom ein Luftstrom. Dies hat den Vorteil, dass das Pipettiersystem weniger aufwändig und kostengünstiger ausgestaltet werden kann.

In weiterer vorteilhafter Ausgestaltung des Pipettiersystems umfasst der Gasstrom ein Schutzgas oder besteht aus einem Schutzgas. Bei dem Schutzgas handelt es sich je nach Anwendungsgebiet beispielsweise um gasförmige Phasen von Kohlenstoffdioxid, Stickstoff, Sauerstoff, Argon und/oder Helium. Auch Gemische von verschiedenen Schutzgasen, Gemische von Schutzgasen und Luft sowie Gemische eines Schutzgases und Luft können vorteilhafterweise verwendet werden. Dies hat den Vorteil, dass bei Verwendung eines Schutzgases die Probe oder Bestandteile der Probe vor Reaktionen mit der Umgebungsluft geschützt werden können. Dies kann besonders dann vorteilhaft sein, wenn es ansonsten zu unerwünschten Reaktionen mit der Umgebungsluft kommen kann.

In weiterer vorteilhafter Ausgestaltung des Pipettiersystems umfasst das Gasführungssystem einen Kammerschlauch, der bevorzugt zwei bis 10, besonders bevorzugt drei bis fünf Kammern umfasst. Besonders vorteilhaft ist ein Kammerschlauch mit vier Kammern. Dies hat den Vorteil, dass
nur ein Schlauch zu verlegen ist und nur ein Schlauch vor z.B. Abrieb und Knicken zu schützen ist. Weiter führt dies auch Platzersparnis.
In weiterer vorteilhafter Ausgestaltung des Pipettiersystems sind die Gasströme in den einzelnen Kammern des Kammerschlauchs unterschiedlich ausgebildet. Somit kann ein abgelöster Tropfen durch z.B. die verschieden starken Luftströme von der Pipettiernadelspitze abgelöst werden und in eine bestimmte Raumrichtung abgelenkt werden. Dies ist besonders dann vorteilhaft, wenn die Pipettiernadel nicht zentrisch ausgestaltet ist, also z.B. sich die Öffnung im Bereich der Pipettiernadelspitze seitlich an der Pipettiernadel befindet. Vorteilhafterweise werden die Gasströme so an die Geometrie der Pipettiernadel angepasst, dass der Flüssigkeitstropfen stetes in Verlängerung der Achse der Pipettiernadel nach unten abgeleitet wird.

In weiterer vorteilhafter Ausgestaltung des Pipettiersystems ist der Kammerschlauch ringförmig um die Pipettiernadel angeordnet. Dies hat den Vorteil, dass mittels des Kammerschlauchs ein ringförmiger Druckimpuls erzeugt werden kann.

In weiterer vorteilhafter Ausgestaltung des Pipettiersystems ist der Druckstoß 0,5 bis 10 ms lang. Dies hat den Vorteil, dass die Probe aufgrund der Kürze des Druckimpulses nicht durchmischt wird und Spritzer vermieden werden.

In weiterer vorteilhafter Ausgestaltung des Pipettiersystems sind der Gasstrom und/oder der Druckstoß im Bereich der Pipettiernadelspitze ringförmig. Dies hat den Vorteil, dass der Flüssigkeitstropfen nicht zerstäubt und der vollständige Flüssigkeitstropfen in einem Gastunnel kontrolliert, z.B. zur Probe unter Einfluss der Schwerkraft zurückgeführt oder anderweitig abgeleitet werden kann.

In weiterer vorteilhafter Ausgestaltung des Pipettiersystems umfasst das Gasführungssystem einen Schlauch oder Kammerschlauch, der Polyurethan oder Silikon umfasst oder aus Polyurethan oder Silikon besteht. Dies hat den Vorteil, dass sich der Schlauch oder Kammerschlauch an die Kontur der Pipettiernadel anpasst, insbesondere auch in Bereichen der Pipettiernadel, in denen sich der Radius der Pipettiernadel verändert, z.B. im Bereich des Übergangs einer Pipettiernadelheizung zur Pipettiernadelspitze.

Ein weiterer Gegenstand der Erfindung ist ein Verfahren zum Pipettieren einer Flüssigkeit in einem automatischen Analysegerät, wobei das automatische Analysegerät ein erfindungsgemäßes Pipettiersystem umfasst und wobei das Verfahren die folgenden Schritte aufweist:
a) Positionieren der Pipettiernadel des Pipettiersystems oberhalb der Öffnung eines ersten Flüssigkeitsbehälters,
b) Eintauchen der Pipettiernadel in die in dem ersten Flüssigkeitsbehälter vorhandene Flüssigkeit und Einsaugen von Flüssigkeit in die Pipettiernadel,
c) Austauchen der Pipettiernadel aus der in dem ersten Flüssigkeitsbehälter vorhandenen Flüssigkeit, und dann
d) Generieren eines Druckstoßes durch Erzeugen eines Gasstroms in dem Gasführungssystem.

In einer bevorzugten Ausführung des Verfahrens umfasst das Verfahren nach Schritt c) und vor Schritt d) den folgenden Schritt:
e) Abgabe der in Schritt b) eingesaugten Flüssigkeit oder eines Teils der Flüssigkeit in den ersten Flüssigkeitsbehälter oder einen zweiten Flüssigkeitsbehälter.

Vorteilhafterweise erfolgt die Abgabe der Flüssigkeit an die Innenwand des ersten oder zweiten Flüssigkeitsbehälters. Weiter erfolgt vorteilhafterweise eine Schrägstellung des ersten oder zweiten Flüssigkeitsbehälters bevor die Flüssigkeit abgegeben wird. Dies kann helfen, dass sich weniger oder weniger große Flüssigkeitstropfen an der Pipettiernadelspitze bilden.

In einer vorteilhaften Ausgestaltung des Verfahrens wird der Druckstoß in Schritt d) generiert, solange die Pipettiernadel noch innerhalb oder oberhalb der Öffnung des ersten oder zweiten Flüssigkeitsbehälters positioniert ist. Dies hat den Vorteil, dass der Tropfen in den ersten oder zweiten Flüssigkeitsbehälter, z.B. ein Probengefäß, zurück gelangt, nicht verloren geht und für weitere Analysen oder Tests noch zur Verfügung steht.

In einer weiteren vorteilhaften Ausgestaltung des Verfahrens enthält die Flüssigkeit eine Körperflüssigkeit oder Bestandteile einer Körperflüssigkeit, bevorzugt Blut.

Ein weiterer Gegenstand der Erfindung ist ein automatisches Analysegerät umfassend ein erfindungsgemäßes Pipettiersystem.

In vorteilhafter Ausgestaltung umfasst das automatische Analysegerät eine Vielzahl von Aufnahmepositionen für jeweils ein Primär-, Aliquot-, und/oder Zielgefäß, und/oder mindestens ein weiteres automatisches Pipettiersystem mit einem robotisch verfahrbaren und/oder robotisch schwenkbaren Transferarm.

In weiterer vorteilhafter Ausgestaltung umfasst das Analysegerät eine Messeinrichtung mit einem Photometer, die eine photometrische Untersuchung der Probe ermöglicht.

Der Begriff "photometrische Untersuchung", wie vorliegend verwendet, bezieht sich auf Absorptions-, Reflektions-, Beugungs-, Fluoreszenz-, Phosphoreszenz-, Chemilumineszenz- und/oder Streuungsmessungen mit elektromagnetischen Wellen. Hier ist zunächst an elektromagnetische Wellen des sichtbaren Spektrums gedacht (zwischen etwa 350 nm und etwa 750 nm Wellenlänge), jedoch auch an Wellen im Infrarot- (IR-) Bereich (zwischen etwa 750 nm und etwa 1 mm Wellenlänge) und im Ultraviolett- (UV-) Bereich (zwischen etwa 350 nm und etwa 50 nm Wellenlänge).

Ein automatisches Analysegerät umfasst in bevorzugter Ausführung eine Vielzahl von Gerätebaugruppen. Bei den Gerätebaugruppen handelt es sich z.B. um eine beispielsweise scheibenförmige Transport- und Lagereinrichtung für Probengefäße, eine beispielsweise scheibenförmige Transport-und Lagereinrichtung für Reagenzbehälter, einen Inkubationsblock, ein Photometer oder eine andere Baugruppe des automatischen Analysegeräts, die zum Prozessieren von Proben benötigt wird.

Unter einer "Probe" ist im Sinne der Erfindung das Material zu verstehen, dass die nachzuweisende Substanz (den Analyten) vermutlich enthält. Der Begriff "Probe" umfasst insbesondere biologische Flüssigkeiten von Menschen oder Tieren wie z.B. Blut, Plasma, Serum, Sputum, Exsudat, bronchoalveoläre Lavage, Lymphflüssigkeit, Synovialflüssigkeit, Samenflüssigkeit, Vaginalschleim, Feces, Urin, Liquor, aber auch z.B. durch Homogenisation oder Zelllyse für die photometrische, bevorzugt nephelometrische Bestimmung entsprechend aufgearbeitete Gewebe- oder Zellkulturproben. Ferner können auch z.B. pflanzliche Flüssigkeiten oder Gewebe, forensische Proben, Wasser- und Abwasserproben, Nahrungsmittel, Arzneimittel als Probe dienen, die ggf. vor der Bestimmung einer entsprechenden Probenvorbehandlung zu unterziehen sind.

Bei einem quantitativen Nachweis wird die Menge, die Konzentration oder die Aktivität des Analyten in der Probe gemessen. Von dem Begriff des "quantitativen Nachweises" sind auch semiquantitative Methoden umfasst, die nur die ungefähre Menge, Konzentration oder Aktivität des Analyten in der Probe erfassen oder nur zu einer relativen Mengen-, Konzentrations-oder Aktivitätsangabe dienen können. Unter einem qualitativen Nachweis ist der Nachweis des Vorhandenseins des Analyten in der Probe überhaupt oder das Anzeigen, dass die Menge, Konzentration oder Aktivität des Analyten in der Probe unterhalb oder oberhalb eines bestimmten oder mehrerer bestimmter Schwellenwerte liegt, zu verstehen.

Unter einem Flüssigkeitstropfen wird eine kleinere Flüssigkeitsmenge verstanden, die in beliebigen Formen vorliegen kann. Beispielsweise kann die Flüssigkeitsmenge kugelige oder runde Formen aufweisen oder wenigstens teilweise in Form eines Flüssigkeitsfilms vorliegen. Ein Flüssigkeitstropfen kann auch z.B. mehrere kleine Mengen einer oder mehrerer Flüssigkeiten umfassen.

### Die Erfindung wird anhand von Zeichnungen exemplarisch näher erläutert. Darin zeigen:

FIG. 1 ein erfindungsgemäßes automatisches Analysegerät (2),
FIG. 2 bis 6 eine schematische Darstellung von Teilen eines erfindungsgemäßen Pipettiersystems (1) für ein automatisches Analysegerät (2).

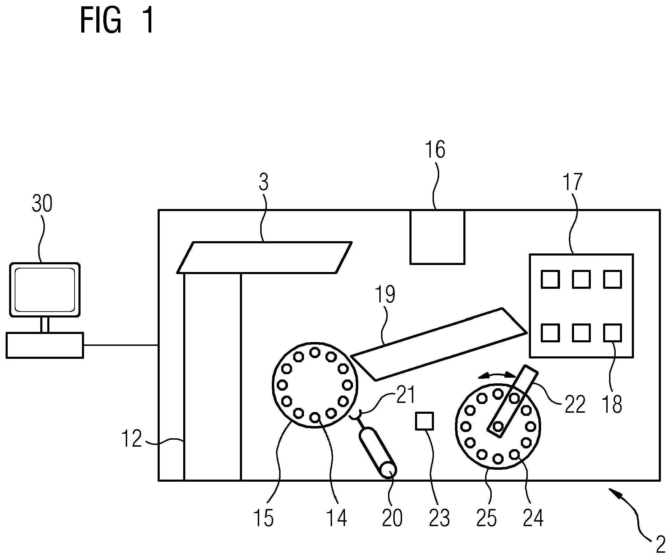

FIG. 1 zeigt eine schematische Darstellung eines automatischen Analysegeräts (2) mit einigen darin enthaltenen Bauteilen. Hierbei werden nur die wichtigsten Bauteile stark vereinfacht dargestellt, um die grundsätzliche Funktion des automatischen Analysegeräts (2) zu erläutern, ohne hierbei detailliert die einzelnen Teile jedes Bauteils darzustellen.

Das automatische Analysegerät (2) ist dafür ausgebildet, vollautomatisch verschiedenste Analysen von Blut oder anderen Körperflüssigkeiten durchzuführen, ohne dass hierfür Aktivitäten eines Benutzers notwendig wären. Notwendige Eingriffe eines Benutzers beschränken sich vielmehr auf Wartung oder Reparatur und Nachfüllarbeiten, wenn z.B. Küvetten nachgefüllt oder Flüssigkeitsbehälter ausgetauscht werden müssen.

Die Patientenproben werden dem automatischen Analysegerät (2) in Primärprobengefäßen auf nicht näher dargestellten Schlitten über eine Zuführungsschiene (12) zugeführt. Informationen hinsichtlich der pro Probe durchzuführenden Analysen können beispielsweise mittels auf den Probengefäßen angebrachten Strichcodes übergeben werden, die in dem automatischen Analysegerät (2) ausgelesen werden. Aus den Probengefäßen werden mit Hilfe eines ersten Pipettiersystems (1) Probenaliquots mittels einer Pipettiernadel (4) entnommen.

Die Probenaliquots werden ebenfalls nicht näher dargestellten Küvetten zugeführt, die in Aufnahmepositionen (14) einer drehbaren, auf 37 °C temperierten Inkubationseinrichtung (15) angeordnet sind. Die Küvetten werden aus einem Küvettenvorratsbehälter (16) entnommen, in dem die Küvetten ungeordnet als Schüttgut vorliegen. Erst bei der Entnahme einer einzelnen Küvette und der Platzierung der Küvette in eine Aufnahmeposition (14) wird für diese Küvette ein Datensatz erstellt, der zunächst die Information, dass es sich um eine Küvette handelt und in welcher Aufnahmeposition (14) sie platziert ist, enthält. In dem auf ca. 8-10 °C gekühlten Reagenzgefäßvorratsbehälter (17) werden Reagenzgefäße (18) mit verschiedenen Reagenzflüssigkeiten aufbewahrt. Reagenzflüssigkeit wird mittels der Pipettiernadel (4) eines zweiten Pipettiersystems (19) aus einem Reagenzgefäß (18) entnommen und zur Bereitstellung eines Reaktionsansatzes in eine Küvette, die bereits ein Probenaliquot enthält, abgegeben. Die Küvette mit dem Reaktionsansatz wird von dem Transferarm (20) mit einem Greifer (21) aus einer Aufnahmeposition (14) der Inkubationseinrichtung (15) entnommen und zum Durchmischen des Reaktionsansatzes zu einer Schütteleinrichtung (23) transferiert. Nach Beendigung des Mischvorgangs wird die Küvette weiter in eine Aufnahmeposition (24) der Aufnahmevorrichtung (25) für eine Messeinrichtung, die ein Photometer (22) zur photometrischen Untersuchung der Probe umfasst, transportiert, wo die Extinktion des Reaktionsansatzes gemessen wird. Das Photometer (22) ist dabei in mindestens eine der beiden Richtungen der dargestellten Pfeile um eine Achse, die mittig bezüglich der Aufnahmevorrichtung (25) angeordnet ist, drehbar oder bevorzugt rotierbar ausgestaltet.

Der gesamte Prozess wird von einer Steuereinheit (30), wie z.B. von einem über eine Datenleitung angeschlossenen Rechner gesteuert, unterstützt durch eine Vielzahl weiterer, nicht näher dargestellter elektronischer Schaltungen und Mikroprozessoren innerhalb des automatischen Analysegeräts (2) und seiner Bauteile. Die Steuereinheit (30) umfasst dabei ein Steuergerät, kann jedoch in weiteren Ausführungen auch zwei oder mehr Steuergeräte umfassen.

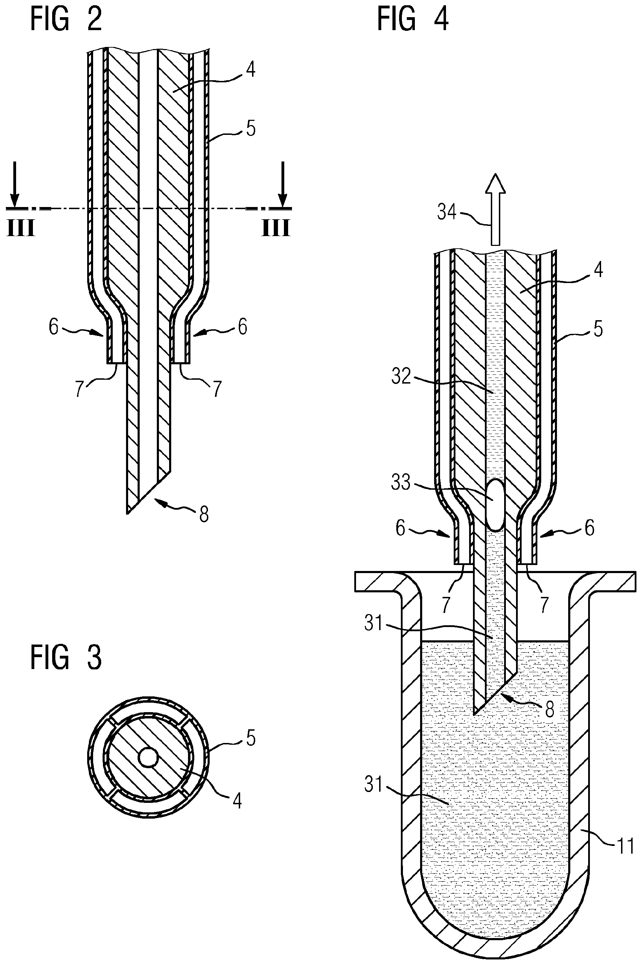

Die Pipettiersysteme (1, 19) umfassen jeweils eine Pipettiervorrichtung (3), die in den FIG. 2 bis 5 näher beschrieben wird.

Die in FIG. 2 schematisch als Schnittzeichnung dargestellte Pipettiervorrichtung (3) ist zur Messung einer Probe in einem automatischen Analysegerät (2), wie beispielhaft in FIG. 1 dargestellt, ausgebildet und ist Teil eines Pipettiersystemes (1, 19). Die Pipettiervorrichtung (3) umfasst eine Pipettiernadel (4) mit einer Pipettiernadelspitze (8). Ein Gasführungssystem (5) zum Führen eines Gasstroms ist ringförmig um die Pipettiernadel (4) herum angeordnet und mit der Pipettiernadel (4) verbunden. Das Gasführungssystem (5) umfassend eine Düse (6) mit einer Öffnung (7) für den Gasstrom, die in Richtung der Pipettiernadelspitze (8) ausgerichtet ist. Ein durch die Öffnung (7) der Düse (6) hindurchtretende Gasstrom breitet sich entlang der Pipettiernadel (4) in Richtung der Pipettiernadelspitze (8) aus und kann einen an der Pipettiernadel (4) anhaftenden Flüssigkeitstropfen (nicht dargestellt) durch einen Druckstoß ablösen.

Eine weitere Schnittzeichung durch die Pipettiervorrichtung (3) in der durch III gekennzeichneten Ebene in FIG 2 ist in FIG 3 dargestellt. Das Gasführungssystem (5) umfasst einen Kammerschlauch mit vier gleichartig ausgestalteten Kammern, die jeweils etwa einen viertel Kreisbogen umspannen. Der Kammerschlauch ist dabei um die Pipettiernadel (4) herum angeordnet.

FIG. 4 zeigt neben den in FIG 2 gezeigten Gegenständen ein Probengefäß (11), das teilweise mit einer Flüssigkeit (31) gefüllt ist, die beispielsweise Bestandteile von menschlichem Blut umfasst. Die Pipettiernadelspitze (8) ist in die Flüssigkeit (31) getaucht. Die Flüssigkeit (31) wird durch die Pipettiernadelspitze (8) in Richtung des Pfeils (34) ins Innere der Pipettiernadel (4) eingesogen. Im Innern der Pipettiernadel (4) befindet sich eine Trennblase (33) aus Luft, die die pipettierte Flüssigkeit (31) und die Systemflüssigkeit (32), bei der es sich beispielsweise um Wasser handelt, trennt.

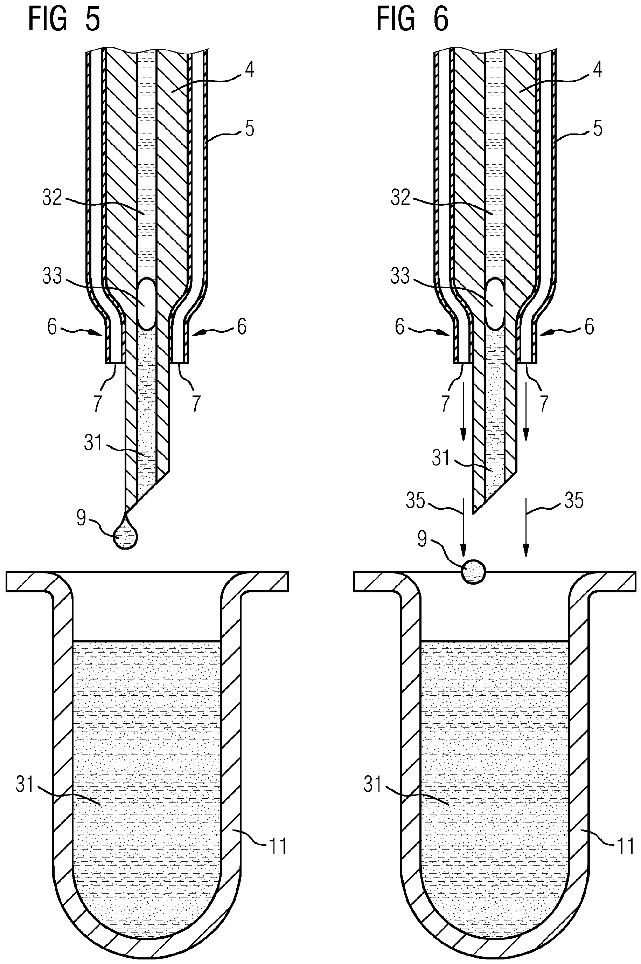

In FIG. 5 ist dargestellt, wie die Pipettiernadelspitze (8) aus der Flüssigkeit (31) wieder ausgetaucht ist. Im Inneren der Pipettiernadel (4) befindet sich Flüssigkeit (31). An der Pipettiernadelspitze (8) hat sich ein Flüssigkeitstropfen (9) gebildet, der aus Flüssigkeit (31) besteht und an der Pipettiernadelspitze (8), z.B. durch Oberflächenkräfte, anhaftet.

In FIG. 6 ist dargestellt, wie der durch die Öffnung (7) der Düse (6) hindurchtretende Gasstrom sich entlang der Pipettiernadel (4) in Richtung der Pipettiernadelspitze (8) ausbreiten und den an der Pipettiernadel (4) anhaftenden Flüssigkeitstropfen (9) durch einen Druckstoß (35), symbolisch dargestellt durch einen Pfeil, ablöst. Der Flüssigkeitstropfen (9) fällt zurück ins Probengefäß (11) und geht nicht verloren. Die Pipettiernadelspitze (8) befindet sich etwa 10 bis 15 mm oberhalb der Oberfläche der sich in dem Probengefäß (11) befindenden Flüssigkeit (31).

### Bezugszeichenliste

- 1: Pipettiersystem
- 2: Analysegerät
- 3: Pipettiervorrichtung
- 4: Pipettiernadel
- 5: Gasführungssystem
- 6: Düse
- 7: Öffnung
- 8: Pipettiernadelspitze
- 9: Flüssigkeitstropfen
- 11: Probengefäß
- 12: Zuführungsschiene
- 14: Aufnahmeposition
- 15: Inkubationseinrichtung
- 16: Küvettenvorratsbehälter
- 17: Reagenzgefäßvorratsbehälter
- 18: Reagenzgefäß
- 19: Pipettiersystem
- 20: Transferarm
- 21: Greifer
- 22: Photometer
- 23: Schütteleinrichtung
- 24: Aufnahmeposition
- 25: Aufnahmevorrichtung
- 30: Steuereinheit
- 31: Flüssigkeit
- 32: Systemflüssigkeit
- 33: Trennblase
- 34: Pfeil
- 35: Druckstoß

## Patentansprüche

1. Pipettiersystem (1, 19) für ein automatisches Analysegerät (2),
das Pipettiersystem (1, 19) umfassend eine Pipettiervorrichtung (3) mit einer Pipettiernadel (4) mit einer Pipettiernadelspitze (8), einem Gasführungssystem (5) zum Führen eines Gasstroms, das Gasführungssystem (5) umfassend eine Düse (6) mit einer Öffnung (7) für den Gasstrom,
wobei der durch die Öffnung (7) der Düse (6) hindurchtretende Gasstrom sich entlang der Pipettiernadel (4) in Richtung der Pipettiernadelspitze (8) ausbreiten und einen an der Pipettiernadel (4) anhaftenden Flüssigkeitstropfen (9) durch einen Druckstoß ablösen kann,
**dadurch gekennzeichnet, dass**
das Pipettiersystem (1, 19) und das Gasführungssystem (5) miteinander verbunden sind.

2. Pipettiersystem (1, 19) nach Anspruch 1, wobei das Pipettiersystem (1, 19) und das Gasführungssystem (5) wenigstens in einer Raumrichtung zusammen automatisch verfahrbar sind.

3. Pipettiersystem (1, 19) nach einem der vorhergehenden Ansprüche, wobei der durch die Öffnung hindurchtretende Gasstrom einen im Bereich der Pipettiernadelspitze (8) an der Pipettiernadel (4) anhaftenden Flüssigkeitstropfen (9) ablösen kann.

4. Pipettiersystem (1, 19) nach einem der vorhergehenden Ansprüche, wobei der Gasstrom ein Luftstrom ist.

5. Pipettiersystem (1, 19) nach einem der vorhergehenden Ansprüche, wobei das Gasführungssystem (5) einen Kammerschlauch umfasst, der bevorzugt zwei bis 10, besonders bevorzugt drei bis fünf Kammern umfasst.

6. Pipettiersystem (1, 19) nach Anspruch 5, wobei der Kammerschlauch ringförmig um die Pipettiernadel (4) angeordnet ist.

7. Pipettiersystem (1, 19) nach einem der vorhergehenden Ansprüche, wobei der Druckstoß 0,5 bis 10 ms lang ist.

8. Pipettiersystem (1, 19) nach einem der vorhergehenden Ansprüche, wobei der Druckstoß 0,5 bis 0,7 Bar Überdruck beträgt.

9. Pipettiersystem (1,19) nach einem der Ansprüche 2 bis 8, wobei der Gasstrom und/oder der Druckstoß im Bereich der Pipettiernadelspitze (8) ringförmig sind.

10. Pipettiersystem (1, 19) nach einem der vorhergehenden Ansprüche, wobei das Gasführungssystem (5) einen Schlauch umfasst, der Polyurethan oder Silikon umfasst oder aus Polyurethan oder Silikon besteht.

11. Verfahren zum Pipettieren einer Flüssigkeit in einem automatischem Analysegerät, wobei das automatische Analysegerät (10) ein Pipettiersystem (1, 19) nach einem der Ansprüche 1 bis 10 umfasst, das Verfahren aufweisend die Schritte:
a) Positionieren der Pipettiernadel (4) des Pipettiersystems (1, 19) oberhalb der Öffnung eines Flüssigkeitsbehälters,
b) Eintauchen der Pipettiernadel (4) in die in dem Flüssigkeitsbehälter vorhandene Flüssigkeit und Einsaugen von Flüssigkeit in die Pipettiernadel (4),
c) Austauchen der Pipettiernadel (4) aus der in dem Flüssigkeitsbehälter vorhandenen Flüssigkeit, und dann
d) Generieren eines Druckstoßes durch Erzeugen eines Gasstroms in dem Gasführungssystem (5).

12. Verfahren gemäß Anspruch 11, wobei der Druckstoß in Schritt d) generiert wird, solange die Pipettiernadel (4) noch innerhalb oder oberhalb der Öffnung des Flüssigkeitsbehälters positioniert ist.

13. Verfahren zum Pipettieren einer Flüssigkeit nach Anspruch 12, wobei die Flüssigkeit eine Körperflüssigkeit, bevorzugt Blut, enthält.

14. Automatisches Analysegerät (2) umfassend ein Pipettiersystem (1, 19) nach einem der Ansprüche 1 bis 10.

15. Automatisches Analysegerät (2) nach Anspruch 14, wobei das automatische Analysegerät (2) eine Vielzahl von Aufnahmepositionen (14, 24) für jeweils ein Primär-, Aliquot-, und/oder Zielgefäß, und/oder mindestens ein weiteres automatisches Pipettiersystem (1, 19) mit einem robotisch verfahrbaren und/oder robotisch schwenkbaren Transferarm (20) umfasst.
